(19) Europäisches Patentamt
European Patent Office
Office européen des brevets

(11) Publication number: **0 082 517**
**B1**

(12) **EUROPEAN PATENT SPECIFICATION**

(45) Date of publication of patent specification: **19.03.86**

(51) Int. Cl.⁴: **C 03 B 37/02,** C 03 B 37/025, G 02 B 6/16

(21) Application number: **82111815.5**

(22) Date of filing: **20.12.82**

(54) **Apparatus and process for the fabrication of optical fibres.**

(30) Priority: **22.12.81 IT 6865581**

(43) Date of publication of application:
**29.06.83 Bulletin 83/26**

(45) Publication of the grant of the patent:
**19.03.86 Bulletin 86/12**

(84) Designated Contracting States:
**AT BE CH DE FR GB LI NL SE**

(56) References cited:
**DE-A-2 440 121**
**FR-A-1 496 223**
**GB-A-1 340 849**
**GB-A-1 545 748**
**US-A-3 791 806**
**US-A-4 277 271**
**US-A-4 289 516**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Modone, Eros**
**Via Cibrario 45**
**Torino (IT)**
Inventor: **Roba, Giacomo**
**Via Allegro 63/5**
**Cogoleto (GE) (IT)**

(74) Representative: **Riederer Freiherr von Paar zu Schönau, Anton et al**
**Freyung 615 Postfach 2664**
**D-8300 Landshut (DE)**

**EP 0 082 517 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an apparatus and process for the fabrication of optical fibres.

Optical transmissions over very long distances are known to be limited by the optical properties of the materials used for the fabrication of optical fibres; in particular, the attenuation and the dispersion determine the wavelength range usable for the transmission.

The raw material presently used in optical fibre fabrication is the silica, $SiO_2$, differently doped in function of the wanted refractive index and dispersion properties. It presents a minimum dispersion value at a wavelength of 1. 27 μm, but with a suitable dopant, compensations are effected to let it approach the minimum attenuation value and to obtain in this way an optimal transmission window.

Minimum attenuation depends also on the Rayleigh scattering losses and is expressed, in function of the wavelength λ and of the material characteristics, by the following relationship:

$$\alpha_{sc}=\alpha_o \cdot \lambda^{-4}$$

where $\alpha_o$ is the scattering coefficient. Its value is:

$$\alpha_o=\frac{8}{3}\pi^3 n^8 p^2 K T_G \beta_T$$

where
- n is the refractive index
- p is the mean photoelastic constant
- K is the Boltzmann's constant
- $T_G$ is the glass transition temperature
- $\beta_T$ is the isothermal compressibility

The magnitudes n, p, $T_G$ and $\beta_T$ are peculiar constants of the material.

The attenuation due to scattering has a theoretical minimum value of about 0.2 dB/km at the wavelength of 1.6 μm for silica, and it is not possible to go down as at longer wavelengths the attenuation tail $\alpha_{abs}$ of the stretching vibration v of the lattice bond $[Si—O_4]^{4-}$ intervenes.

This latter has a behaviour given by the expression:

$$\alpha_{abs}=A \exp[-\gamma \cdot (\frac{v}{v_1})]$$

where A and γ are constants and $v_1$ is the stretching fundamental-vibration frequency of the bond $Si-O_4$ and depends on the force constant [f] and on the reduced mass $\mu_{SiO}$ of the silicon-oxygen bond, given by:

$$\mu_{SiO}=\frac{m_{Si} \cdot m_O}{m_{Si}+2m_O}$$

where $m_{Si}$ and $m_O$ are silicon and oxygen atomic masses respectively.

The relationship which expresses the value of $v_1$ is the following:

$$v_1=\frac{1}{2\pi}(f/\mu_{SiO})^{1/2}$$

Should the silica be replaced by material with lower $v_1$, that is with a lower force constant f and/or a higher reduced mass μ, the minimum attenuation region could be shifted towards longer wavelengths, where scattering losses descrease.

In silica the parameter which makes $v_1$ value relatively high is the reduced mass of the group Si—O, which is conditioned by the small value of the oxygen mass. Therefore, in order to obtain the wanted result, alternative materials to oxides are to be found. These requirements are partly satisfied by halides. In fact, the compounds of F, Cl, Br, J have greater reduced-masses.

In the optical fibre field a number of materials have already been proposed, such as fluorides; but serious problems are encountered relating to their use. Particularly:

- high reactivity to gases composing the atmosphere;
- toxicity;
- low stability with easy devitrification of the produced glass;
- lack of a suited technology to the fibre fabrication;
- low value of the minimum of optical dispersion, with consequent difficult optimization of minimum attenuation and dispersion conditions.

For producing optical fibres, a prior art as stated in a prior art portion of claim 1 is known (FR—A—1 496 223) using a pair of concentric crucibles, one of the crucibles supplying the material for the fibre core and the other one the material for the fibre cladding. A similar apparatus is also known for more than two concentric regions (GB—A—1 545 748).

Another known apparatus and method of drawing optical fibres (US—A—4 277 271) uses a converging tube wherein a glassy liquid constituting the fibre core material is prepared and drawing is carried out at the bottom so that after drawing the tube constitutes the cladding and the former glassy liquid the core. The tube is moved as the fibre is drawn for compensating for the drawn-off material.

In another known method (DE—A—24 40 121), a glass tube and a glass rod having different refractive indices are melted and drawn together, an interlayer of low viscosity being contemporaneously arranged between the tubes and in consequence between the fibre core and the cladding.

The problem the invention is based upon is to offer suited technology for enabling the

manufacturing of optical fibres using alternative materials to oxides.

An apparatus for drawing optical fibres comprising a fibre core and a fibre cladding, the said apparatus comprising a first crucible for receiving the raw materials for the fibre core, said first crucible consisting of a material having a softening temperature higher than that of the raw materials of both the fibre core and the fibre cladding and presenting at the bottom a converging shape terminating in a nozzle, said apparatus further comprising a second crucible surrounding the first one and presenting at the bottom a converging shape, a mechanical device provided to feed the first crucible and causing the translation of the material received therein, and heating means for heating the materials contained in the crucibles, is according to the invention characterized in that the converging shapes of the crucibles have a profile as results from drawing, the second crucible is made of low-melting glass so as to have a softening temperature similar to that of the raw materials and is connected with a mechanical device for translating it together with materials forming the fibre cladding and inserted between the two crucibles, the heating means consisting of a first furnace for the vitrification of the materials contained in the crucibles and a second furnace for the drawing. Such apparatus allows to exploit the outer crucible to become a protective coating, and the desired materials are permitted to be used which allows the transmission of radiation with wavelengths longer than 5 µm, the optical fibre presenting a minimum attenuation lower than $10^{-3}$dB/km and being particularly protected against the natural agencies.

A process for the fabrication of optical fibres utilizing the apparatus of any of claims 1 to 4, wherein the materials forming the fibre core are placed in the first crucible and the materials forming the fibre cladding are placed in the second crucible is according to the invention characterized in that the materials which were beforehand purified and mixed to obtain a homogeneous composition where still unvitrified are vitrified and where vitrified are further purified by thermal diffusion, and fibre drawing is then started by raising the temperature in the region of the nozzle and the converging shapes of the crucibles to the softening temperature of the raw materials and of the second crucible and the consumption of the material forming the drawn fibre is compensated by translating the second crucible, the raw material forming the cladding and the raw materials forming the core in the fibre drawing direction at speeds adequate to the wanted ratio between the core diameter and the cladding diameter, the material of the second crucible forming a coating of the fibre.

Furthermore the invention provides optical fibres fabricated according to the process of any of claims 7 and 8 to 11 as dependant on claim 7.

The foregoing and other characteristics of the present invention will be made clearer by the following description of a preferred embodiment thereof given by way of example and not in a limiting sense, and by the annexed drawing showing an apparatus for the production of optical fibres.

To obtain a remarkable shift of the fundamental-vibration frequency with respect to that of silica, chlorides are to be used in the raw material production. Besides avoiding the above listed fluoride disadvantages, a further reduction of the attenuation can be achieved thanks to the chlorine mass which is greater than that of fluorine. Moreover, chlorides present lower reactivity to natural agencies and have tolerable toxicity levels.

The obtained-glass stability can be optimized by duly choosing both the number and percentages of the single components.

Since long wavelengths are used the component number can be increased without increasing too much scattering losses, thus obtaining multi-component chloride-based glasses. Besides, to use spectral regions up to and above 5 µm, elements having great atomic mass, such as Hf, Zr, Th, Ba, La, Pb, Bi and generally elements of the 6th and 7th period are associated with chlorine. The chlorides of Hf, Zr, Th can be considered necessary to build the glass matrix, together or separately, while the chlorides of the other elements are added to favour the vitrification and shift the dispersion minimum towards the longer wavelength regions. Chlorides of lighter elements, such as $AlCl_3$, $ZnCl_2$, etc., can be used to the same aim.

A typical combination of the compounds obtained from the elements above is the following:

$$50HfCl_4-20ThCl_4-20ZrCL_4-10BaCl_2$$

With mixtures of this kind the glass transition temperature $T_G$ is comprised within the range 250° to 500°C. This fact reduces to nearly one third the Rayleigh scattering coefficient $\alpha_0$.

The typical silica impurities, such as transition metals and hydroxyl groups do not affect the attenuation of these glasses as the relative absorption bands fall before the 3 µm wavelength.

These compounds are not usable to fabricate fibre preforms according to the traditional CVD techniques, owing to the high boiling temperature of the basic reagents.

The figure shows an apparatus for the fabrication of optical fibres by multi-component glasses based on halides, and more particularly, on chlorides.

The apparatus comprises two furnaces 1 and 2 and a quartz crucible 3, ending with a nozzle obtained by drawing. Outside the crucible 3 there is a crucible 4 consisting of low-melting oxide-based glass, which presents a converging shape coaxial with the preceding nozzle. This converging shape is directly obtained during the fibre drawing. Reference 5 denotes a device for feeding

the glass, forming the fibre core inside crucible 3. Screw devices 6 and 7 advance the glass rod while the optical fibre is being drawn.

Reference 9 denotes an analogous device feeding both the glass forming the outer fibre cladding and the crucible 4 inside the furnace. Two screw devices 10 and 11 advance the material and the crucible 4.

The raw materials in powder form, that is the chlorides of the above-cited elements, are first purified by sublimation in inert atmosphere by duly varying the pressure and temperature. They are then mixed so as to attain the wanted combination with constant percentages at each point and are introduced into a quartz tube. They are then vitrified in the furnace and the resultant rod 8 is purified by thermal diffusion. The materials forming the cladding, similar to the preceding ones, apart from percentual variations of a number of components in order to obtain a difference in the refractive indices, are individually purified as in the previous case and mixed, then they are placed between crucibles 3 and 4, vitrified and purified by thermal diffusion.

The materials forming the core and the cladding can be vitrified, as an alternative, directly in the crucibles by using the same furnace 1, which extends over the whole crucible length. Furnace 2, placed in correspondance with the converging shape, generates the temperature necessary to fibre drawing.

When choosing low-softening oxide-based glass, the coefficients of thermal expansion, the glass transition temperatures and the density of the chloride-based glasses the fibre is made of have to be taken into account. Crucible 4 in fact is drawn together with the fibre, therefore it acts not only as a crucible, but also as a protective coating, thus obtaining the insulation from the external environment of the materials forming the fibre and a better stability in time. Provided the present requirements are satisified, the coating does not exert any thermal or mechanical stress on the fibre.

The thermal expansion coefficient and glass transition temperature of multi-component chloride-based glasses can vary respectively between 50 and $200 \cdot 10^{-7}$ °C$^{-1}$ and between 200 and 600°C, while their densities can range from 3 to 8 g/cm$^3$. By making the crucible 4 with a glass having a density value similar to that of the chlorides, material compenetration with consequent optical fibre contamination is avoided. Among those presently on the market it is possible to use advantageously, for instance, Schott glasses of the kind SF52 with a density of 4. 10 g/cm$^3$, an expansion coefficient of $105 \times 10^{-7}$ °C$^{-1}$ and a glass transition temperature of 406°C, or the kind SF59 with values of 6.26 g/cm$^3$, $103 \cdot 10^{-7}$ °C$^{-1}$ and 362°C of density, expansion coefficient and temperature.

After raw material vitrification, also furnace 2 is activated in order to attain the softening temperature. Then the converging shape is generated in crucible 4, by drawing with due speed such as to obtain the wanted outer fibre diameter, for instance 125 µm, according to the present international standard. The core-cladding ratio depends both on the nozzle size of crucible 3 and on the feeding speed of crucible 4. The feeding speed of crucible 4 has to be determined so as to maintain the wanted core-cladding ratio within the variablility interval allowed by the nozzle size of crucible 3.

Devices 5 and 9, designed to supply the glass for the core and the cladding respectively, must present reductions allowing a translation speed in the interval comprised between 1 and 50 cm/h.

**Claims**

1. Apparatus for drawing optical fibres comprising a fibre core and a fibre cladding, said apparatus comprising a first crucible (3) for receiving the raw materials for the fibre core, said first crucible consisting of a material having a softening temperature higher than that of the raw materials of both the fibre core and the fibre cladding and presenting at the bottom a converging shape terminating in a nozzle, said apparatus further comprising a second crucible (4) surrounding the first one and presenting at the bottom a converging shape, a mechanical device (5) provided to feed the first crucible and causing the translation of the material received therein, and heating means (1, 2) for heating the materials contained in the crucibles, characterized in that the converging shapes of the crucibles (3, 4) have a profile as results from drawing, the second crucible is made of low-melting glass so as to have a softening temperature similar to that of the raw materials and is connected with a mechanical device (9) for translating it together with materials forming the fibre cladding and inserted between the two crucibles (3, 4), the heating means consisting of a first furnace (1) for the vitrification of the materials contained in the crucibles and a second furnace (2) for the drawing.

2. Apparatus as in claim 1, characterized in that said mechanical devices (5, 9) comprise screw devices (6, 7; 10, 11) designed to the translation speeds to such a value that the material quantity arriving at the drawing region compensates for that used in optical fibre drawing.

3. Apparatus as in claim 1 or 2, characterized in that said second crucible (4) is made of glass having glass transition temperature, density and thermal-expansion coefficient similar to those of the material the core and cladding are composed of.

4. Process for the fabrication of optical fibres utilizing the apparatus of any of the preceding claims, wherein the materials forming the fibre core are placed in the first crucible (3) and the materials forming the fibre cladding are placed in the second crucible (4), characterized in that the materials which were beforehand purified and mixed to obtain a homogeneous composition where still unvitrified are vitrified and where vitrified are further purified by thermal diffusion,

and fibre drawing is then started by raising the temperature in the region of the nozzle and the converging shapes of the crucibles (3, 4) to the softening temperature of the raw materials and of the second crucible (4) and the consumption of the material forming the drawn fibre is compensated by translating the second crucible (4), the raw material forming the cladding and the raw materials forming the core in the fibre drawing direction at speeds adequate to the wanted ratio between the core diameter and the cladding diameter, the material of the second crucible (4) forming a coating of the fibre.

5. Process as in claim 4, characterized in that said materials forming the core are introduced into said first nozzle as powder and are then vitrified.

6. Process as in claim 4, characterized in that said materials forming the core are introduced into said first nozzle already vitrified and in the shape of a rod (8).

7. Process as in any of claims 4 to 6 characterized in that said raw materials forming the fibre core and cladding are halides.

8. Process as in any of claims 4 to 7, characterized in that said raw materials forming the fibre core and cladding comprise chlorides.

9. Process as in claim 8, characterized in that said raw materials composing the fibre core and cladding comprise chlorides of elements having high atomic mass for the construction of the glass matrix and to a lower amount chlorides of elements with lower atomic mass to increase the matrix stability and to obtain optical fibres with a larger bandwidth.

10. Process as in claim 9, characterized in that said high atomic mass elements comprise Hf, Zr, Th, Ba, La, Pb and Bi.

11. Process as in claim 9 or 10, characterized in that said lower atomic mass elements comprise Al and Zn.

12. Optical fibres fabricated according to the process of any of claims 7, and 8 to 11 as dependent on claim 7.

**Patentansprüche**

1. Vorrichtung zum Ziehen optischer Fasern mit einem Faserkern und einem Faserüberzug, wobei die Vorrichtung ein erstes, die Rohmaterialien für den Faserkern aufnehmendes Schmelzgefäß (3) umfaßt, das aus einem Material besteht, dessen Erweichungstemperatur höher liegt als die der Rohmaterialien sowohl des Faserkerns auch als des Faserüberzugs, und das an der Unterseite eine konvergierende Form aufweist, die in einer Düse endet, weiterhin ein zweites, das erste Schmelzgefäß umgebendes Schmelzgefäß (4) umfaßt, das an der Unterseite eine konvergierende Form aufweist, sowie ferner eine mechanische Vorrichtung (5) für den Vorschub des ersten Schmelzgefäßes und zum Bewirken der Bewegung des darin befindlichen Materials und Heizeinrichtungen (1, 2) zum Erwärmen der in den Schmelzgefäßen befindlichen Materialien aufwiest, dadurch gekennzeichnet, daß die konvergierenden Formen der Schmelzgefäße (3, 4) ein Profil, wie es sich vom Ziehen ergibt, aufweisen und das zweite Schmelzgefäß aus einem niedrigschmelzenden Glas besteht und somit eine Erweichungstemperatur gleich derjenigen der Rohmaterialien hat und mit einer mechanischen Vorrichtung (9) für seine Bewegung zusammen mit den den Faserüberzug bildenden und zwischen die beiden Schmelzgefäße (3, 4) eingebrachten Materialien verbunden ist, wobei die Heizeinrichtung aus einer ersten Heizvorrichtung (1) für die Vitrifikation der in den Schmelzgefäßen enthaltenden Materialien und einer zweiten Heizvorrichtung (2) für das Ziehen besteht.

2. Vorrichtung nach Anspruch 1, dadurch gekennzeichnet, daß die mechanischen Vorrichtungen (5, 9) Schraubvorrichtungen (6, 7; 10, 11) zum Einstellen der Bewegungsgeschwindigkeit auf einen solchen Wert umfassen, daß die im Ziehbereich eintreffende Materialmenge die zum Ziehen der optischen Faser abgezogene Materialmenge ausgleicht.

3. Vorrichtung nach Anspruch 1 oder 2, dadurch gekennzeichnet, daß das zweite Schmelzgefäß (4) aus Glas besteht, dessen Glas-Übergangstemperatur, Dichte und thermischer Expansionskoeffizient denen des Materials gleichen, aus dem der Kern und der Überzug aufgebaut sind.

4. Verfahren zur Herstellung optischer Fasern unter Verwendung der Vorrichtung nach einem der vorhergehenden Ansprüche, wobei man die Materialien, die den Faserkern bilden sollen, und die Materialien, die den Faserüberzug bilden sollen, in das erste Schmelzgefäß (3) bzw. in das zweite Schmelzgefäß (4) einbringt, dadurch gekennzeichnet, daß man die Materialien, nachdem man sie gereinigt und zum Erhalten einer homogenen Zusammensetzung gemischt hat, soweit sie noch unvitrifiziert sind, vitrifiziert und, soweit sie vitrifiziert sind, durch thermische Diffussion weiter reinigt und daß man dann das Faserziehen beginnt, indem man den Bereich der Düse und der konvergierenden Formen der Schmelzgefäße (3, 4) auf die Erweichungstemperatur der Rohmaterialien und des zweiten Schmelzgefäßes (4) erwärmt und denn den Verbrauch des in der gezogenen Faser verwendeten Materials ausgleicht, indem man das zweite Schmelzgefäß (4), die zweite Düse, die Rohmaterialien, die den Überzug bilden sollen, und die Rohmaterialien, die den Kern bilden sollen, in die selbe Richtung wie die Faserziehrichtung mit Geschwindigkeiten bewegt, die dem geforderten Verhältnis zwischen dem Kerndurchmesser und dem Überzugdurchmesser entsprechen, wobei das Material des zweiten Schmelzgefäßes (4) einen Außenmentel bildet.

5. Verfahren nach Anspruch 4, dadurch gekennzeichnet, daß man die den Kern bildenden Materialien in die erste Düse als Pulver einführt und sie dann vitrifiziert.

6. Verfahren nach Anspruch 4, dadurch gekennzeichnet, daß man die den Kern bildenden

Materialien in die erste Düse bereits vitrifiziert und in Stabform (8) einführt.

7. Verfahren nach einem der Ansprüche 4 bis 6, dadurch gekennzeichnet, daß man als Rohmaterilalien zur Bildung des Faserkerns und des Faserüberzugs Halogenide verwendet.

8. Verfahren nach einem der Ansprüche 4 bis 7, dadurch gekennzeichnet, daß man Rohmaterialien zur Bildung des Faserkerns und des Faserüberzugs verwendet, die Chloride enthalten.

9. Verfahren nach Anspruch 8, dadurch gekennzeichnet, daß man Rohmaterialien zur Bildung des Faserkerns und des Faserüberzugs verwendet, die Chloride von Elementen mit hohem Atomgewicht für die Konstruktion der Glasmatrix enthalten und in geringerer Menge Chloride von Elementen mit niedrigerem Atomgewicht zum Erhöhen der Matrixstabilität und zum Erhalten optischer Fasern mit einer größeren Bandbreite enthalten.

10. Verfahren nach Anspruch 9, dadurch gekennzeichnet, daß die Elemente mit hohem Atomgewicht Hf, Zr, Th, Ba, La, Pb und/oder Bi sind.

11. Verfahren nach Anspruch 9 oder 10, dadurch gekennzeichnet, daß die Elemente mit dem niedrigeren Atomgewicht Al und/oder Zn sind.

12. Optische Fasern, die nach einem Verfahren gemäß Anspruch 7 oder gemäß einem der auf Anspruch 7 rückbezogenen Ansprüche 8 bis 11 hergestellt sind.

**Revendications**

1. Appareil pour l'étirage de fibres optiques comprenant un coeur et une gaine, ledit appareil étant constitué par un premier creuset (3) pour recevoir les matériaux de base pour le coeur de la fibre, ledit premier creuset étant fabriqué en un matériau ayant une temperature de fusion qui dépasse cells des matériaux de base qui forment le coeur et la gaine de la fibre, et présentant au fond une forme convergente qui se termine par une tuyère, ledit appareil comprenant aussi un second creuset (4) qui est disposé à l'extérieur dudit premier creuset et qui présente au fond une forme convergeante, un dispositif mécanique (5) étant fourni pour alimenter le premier creuset en provoquant la translation du matériau reçu dedans, et des moyens de chauffage (1, 2) pour chauffer les matériaux contenus dans les creusets, caractérisé en ce que les formes convergeantes des creusets (3, 4) ont un profile comme il résulte du fibrage, le second creuset est fabriqué en verre ayant une basse température de fusion, de manière à obtenir une temperature de fusion similaire à celle des matériaux de base, et est connecté à un dispositif mécanique (9) qui provoque sa translation avec les matériaux qui forment la gaine de la fibre placés entre les deux creusets (3, 4), les moyens de chauffage étant constitués par un premiér four (1) pour la vitrification des matériaux contenus dans les creusets et un deuxième four (2) pour le fibrage.

2. Appareil selon la revendication 1, caractérisé en ce que lesdits dispositifs mécaniques (5, 9) comprenent des dispositif à vis (6, 7, 10, 11) pour les vitesses de translation tels que la quantité de matériau qui arrive à la zone de fibrage poisse compenser le matériau employé dans l'étirage de la fibre optique.

3. Appareil selon la revendication 1 ou 2, caractérisé en ce que ledit second creuset (4) est fabriqué en verre ayant une témperature de transition vitreuse, densité et coefficient de dilatation similaires à ceux des matériaux qui forment le coeur et la gaine des fibres optiques.

4. Procédé pour la fabrication de fibres optiques qui emploie l'appareil selon les revendications qui précèdent, où les matériaux qui forment la coeur de la fibre sont placés dans le premier creuset (3) et les materiaux qui forment la gaine de la fibre sont placés dans le second creuset (4), caractérisé en ce que les matériaux, qui étaient déjà purifiés et melangés pour obtenir une composition homogène, où ne sont pas vitrifés sont vitrifés et où sont déjà vitrifiés sout purifiés davantage par diffusion thermique, et on commence alors l'étirage de la fibre en portant la zone avec la tuyère et avec la forme convergeante desdits creusets (3, 4) à la température de fusion des materiaux de base et du second creuset (4) et la consommation de matériau utilisé dans la fibre étirée est compensée en déplaçant par translation soit le second creuset (4), soit les matériaux de base qui constituent la gaine, soit les matériaux de base qui constituent le coeur dans le même direction d'étirage de la fibre et à une vitesse adéquate au rapport désiré entre le diamètre du coeur et de la gaine de la fibre, les matériaux du second creuset (4) recouvrant la fibre.

5. Procédé selon la revendication 4, caractérisé en ce que les matériaux qui constituent le coeur sont introduits dans la première tuyère à l'état de poudre et sont après vitrifiés.

6. Procédé selon la revendication 4, caractérisé en ce que lesdits matériaux qui forment le coeur sont introduits dans la première tuyère déjà vitrifiés et sous forme d'une baguette (8).

7. Procédé selon l'une quelconque des revendications de 4 à 6, caractérisé en ce que lesdits matériaux de base qui forment le coeur et la gaine de la fibre sont des halogénures.

8. Procédé selon l'une quelconque des revendications de 4 à 7, caractérisé en ce que lesdits matériaux de base qui forment le coeur et la gaine de la fibre comprennent des chlorures.

9. Procédé selon la revendication 8, caractérisé en ce que lesdits matériaux de base qui forment le coeur et la gaine de la fibre comprennent des chlorures d'éléments ayant une masse atomique élevée pour la production de la matrice de verre et, en quantité plus petite, des chlorures d'éléments ayant une masse atomique inférieure pour augmenter la stabilité du verre et pour obtenir des fibres optiques avec une largeur de bande élevée.

10. Procédé selon la revendication 9, caractérisé en ce que lesdits éléments ayant une masse atomique élevée comprennent Hf, Zr, Th, Ba, La, Pb et Bi.

11. Procédé selon les revendications 9 où 10, caractérisé en ce que lesdits éléments ayant une masse atomique inférieure comprennent Al et Zn.

12. Fibres optiques obtenues par le procédé d'une quelconque des revendications 7, et de 8 à 11 comme dépendant de la revendication 7.

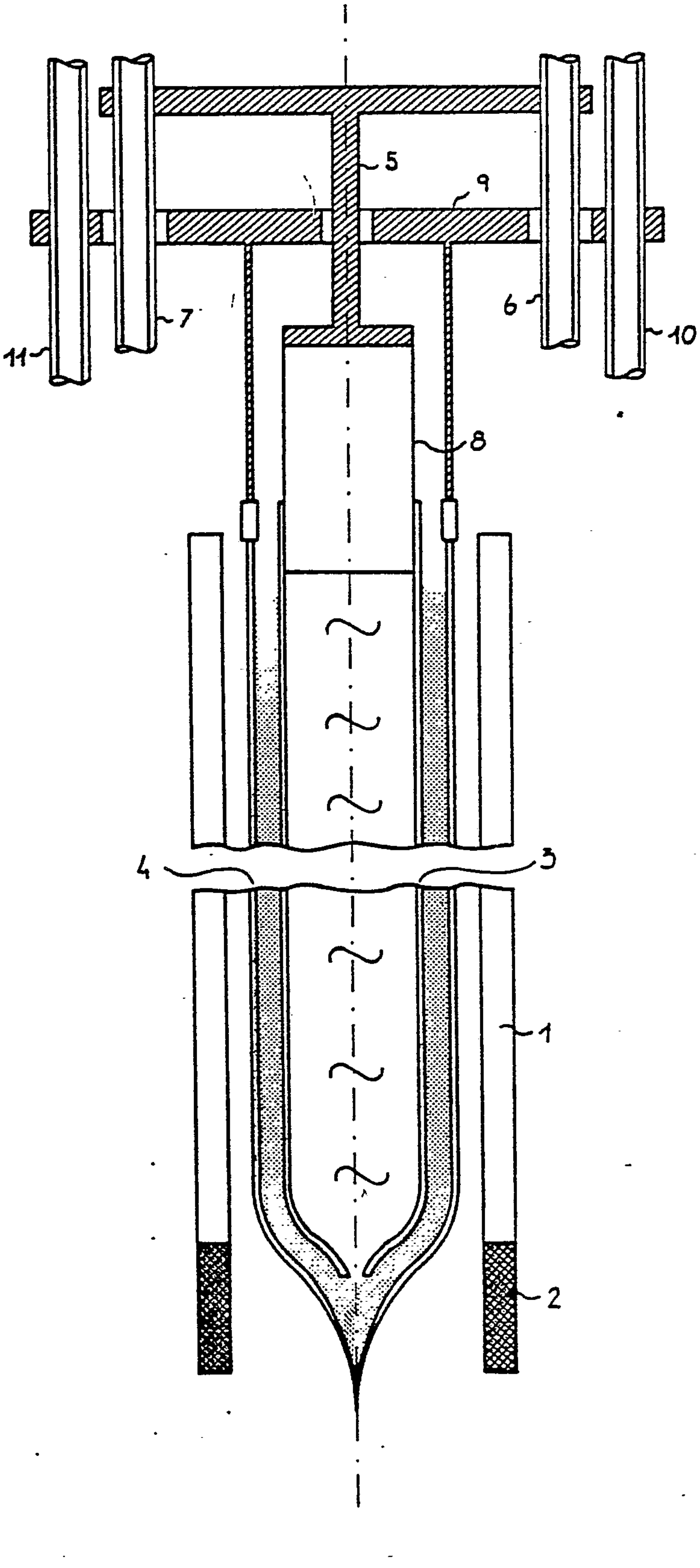
5
9
7
11
6
10
8
4
3
1
2